# EUROPÄISCHE PATENTANMELDUNG

(11) **EP 0 751 042 A1**
(43) Veröffentlichungstag der Anmeldung: **02.01.1997**
(21) Anmeldenummer: 96107144.6
(22) Anmeldetag: 07.05.1996
(51) Int. Cl.: B60R 11/02

(54) **Abnehmbares Frontteil für ein Autoradio**

(30) Priorität: 30.06.1995 DE 19523901
(71) Anmelder: ROBERT BOSCH GMBH, 70442 Stuttgart (DE)
(72) Erfinder: Wietzke, Joachim, Dr. Dr.-Ing., 31141 Hildesheim (DE); Schuchardt, Günter, Dipl.-Ing. (FH), 31141 Hildesheim (DE)

(57) **Zusammenfassung**

Erfindungsgemäß wird ein abnehmbares Frontteil für ein Autoradio vorgeschlagen, bei dem die Energie- und Signalübertragung zum Frontteil kontaktlos erfolgt. Als geeignete Sende-/Empfängereinheiten werden elektromagnetische (2-6,10,12), optische oder akustische Vorrichtungen vorgeschlagen. Die Übertragung kann je nach Bedarf bidirektional erfolgen. Das Bedienteil wird derart codiert, daß es nur zu einem zugehörigen Autoradio funktionsfähig ist. Ohne das passende Bedienteil ist das Autoradio funktionsunfähig.

## Beschreibung

### Stand der Technik

Die Erfindung geht aus von einem abnehmbaren Frontteil für ein Autoradio mit wenigstens einem Bedienelement und/oder einer Anzeige, die von dem Autoradio versorgt werden, nach der Gattung des Hauptanspruchs. Es ist schon bekannt, zum Schutz des Autoradios dessen Frontteil abzunehmen, so daß der verbliebene Rest des Autoradios für einen möglichen Dieb wertlos ist. Da in dem Frontteil Bedienelemente und Anzeigen und auch weitere elektronische Schaltungen eingebaut sind, die von dem Autoradio einerseits elektrisch versorgt werden müssen und andererseits Informationen an das Autoradio übertragen, sind zwischen dem Frontteil und dem Autoradio Kontakte vorgesehen. Teilweise sind sehr viele Leitungsverbindungen zum Frontteil zu überbrücken, sodaß entsprechend viele Kontakte notwendig sind. Da Kontakte generell störanfällig sind und sich durch Korrosion, Abnutzung und Verschmutzung häufig Störungen einstellen, müssen die Kontakte entsprechend sorgfältig konstruiert sein. Dieses verteuert jedoch das Autoradio.

### Vorteile der Erfindung

Das abnehmbare Frontteil für ein Autoradio mit den kennzeichnenden Merkmalen des Hauptanspruchs hat demgegenüber den Vorteil, daß sowohl die Energie- als auch die Signalübertragung zwischen dem Autoradio und dem Frontteil kontaktlos erfolgt. Durch die fehlenden Kontakte wird somit die Betriebssicherheit erhöht, da durch häufiges Abnehmen des Frontteils kein Verschleiß auftreten kann. Andererseits kann das Frontteil weiterhin alle gewünschten Bedienelemente und Anzeigen enthalten, so daß weiterhin die Designwünsche vorteilhaft erfüllt werden können. Besonders vorteilhaft ist, daß im Frontteil keine Batterie für die Stromversorgung der elektronischen Bauteile eingebaut sein muß, so daß keine zusätzliche Wartung erforderlich ist.

Durch die in den abhängigen Ansprüchen aufgeführten Maßnahmen sind vorteilhafte Weiterbildungen und Verbesserungen des im Hauptanspruch angegebenen abnehmbaren Frontteils möglich. Besonders vorteilhaft ist, daß die Sende-/Empfangseinheit nicht nur zur Übertragung der Versorgungsenergie für das Frontteil, sondern auch zur Signalübertragung ausgebildet ist. Dadurch ist die Übertragungseinrichtung einfach und preiswert herstellbar. Für die Signalübertragung wird vorteilhaft der Träger nach bekannten Frequenz-, Phasen- oder Amplitudenmodulationsverfahren moduliert und auf der Empfängerseite entsprechend decodiert. Alternativ ist vorgesehen, eine weitere Sende-/Empfangseinheit im Frontteil bzw. im Autoradio einzubauen, um die Signalübertragung separat von der Energieübertragung durchzuführen. Die Signalübertragung kann dann an geeigneter Stelle im Frontteil vorgesehen werden und wegen der geringen Signalenergie entsprechend einfach ausgeführt werden. Geeignet erscheinen elektromagnetische Übertragungen aber auch optische oder akustische Übertragungseinrichtungen.

Bei vielen Autoradios werden z.B. anzuzeigende Informationen an das Bedienteil übertragen und andererseits die durch Betätigung der Schalter ausgelösten Signale vom Frontteil an das Autoradio übertragen. Dadurch ist vorteilhaft eine bidirektonale Ausgestaltung der Sende-/Empfangseinheit vorgesehen.

Insbesondere für einen Diebstahlschutz wird vorteilhaft wenigstens ein Teil der Signale codiert übertragen, so daß zu jedem Autoradio nur ein einziges abnehmbares Frontteil verwendbar ist. Nur wenn die Codierung im Frontteil übereinstimmt mit der Codierung des Autoradios, werden die weiteren Bedienfunktionen oder Anzeigen freigegeben. Dadurch ist der restliche Autoradioteil für einen Dieb praktisch wertlos, da ohne das zugehörige Frontteil das Autoradio nicht betriebsfähig gemacht werden kann.

### Zeichnung

### Beschreibung der Ausführungsbeispiele

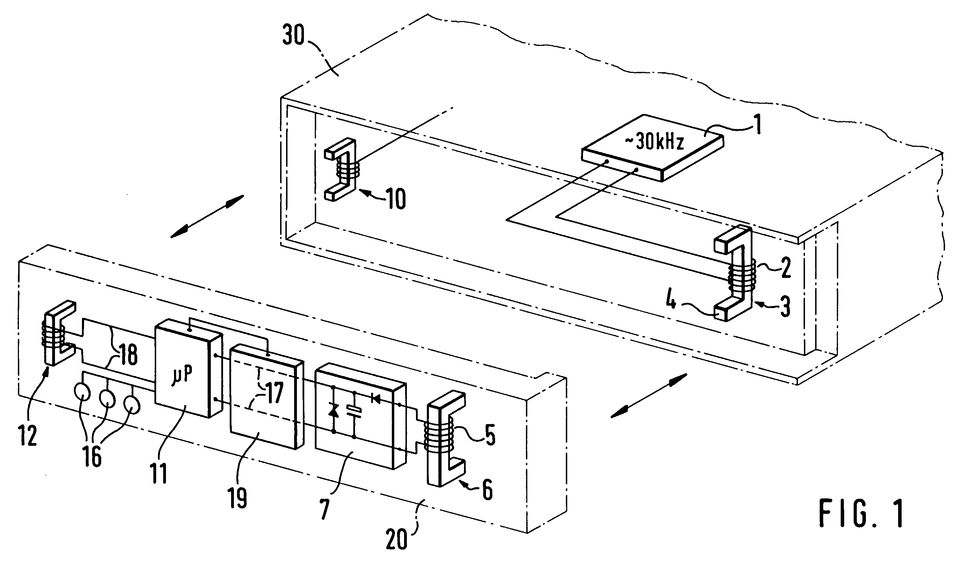

Figur 1 zeigt ein erste Ausführungsbeispiel eines Autoradios 30 mit einem abnehmbaren Frontteil 20. Aus Übersichtlichkeitsgründen sind im wesentlichen nur die Teile dargestellt, die für die Übertragung sowohl der Energie als auch der Signale und Daten erforderlich sind. Insbesondere sind die Bedienelemente 16 im Frontteil 20 nur symbolisch dargestellt. Aus Übersichtlichkeitsgründen wurde eine Anzeige oder ein Einschubschlitz für ein Cassettenteil oder eine CD weggelassen. Das Autoradio 30 weist einen Wechselspannungsgenerator 1 auf, der beispielsweise in einem Frequenzbereich von 30 KHz schwingt. Der Wechselspannungsgenerator ist mit einem elektromagnetischen Sender 3 verbunden, der vorzugsweise einen U-förmigen Ferritkern 4 aufweist. Der Ferritkern 4 ist mit einer Primärwicklung 2 belegt und derart im Frontbereich des Autoradios angeordnet, daß er die Wechselspannung an einen entsprechend angeordneten Empfänger 6 am Frontteil 20 übertragen kann. Der Empfänger 6 hat ebenfalls einen Ferritkern, der durch seine Struktur im aufgesteckten Zustand des Frontteils einen möglichst geringen Luftspalt mit geringen Verlusten, aufweist, um eine sichere Übertragung zu gewährleisten. Eine Sekundärwicklung 5 auf dem Empfänger 6 ist mit ihren beiden Anschlüssen mit einem Spannungswandler 7 verbunden. Der Spannungswandler 7 liefert eine Ausgangsspannung über Leitungen 17 an eine Steuerung 11, die beispielsweise einen Mikroprozessor aufweist. Der Mikroprozessor 11 ist mit Eingängen einer Anzeige 19 sowie den Bedienelementen 16 verbunden. Desweiteren ist die Steuerung 11 mit einem weiteren Sender und/oder Empfänger 12 verbunden, dessen Empfänger bzw. Sender 10 entsprechend im Autoradio 30 angeordnet ist. Über diese weitere Sende-/Empfangseinheit werden vorzugsweise Signale vom Autoradio beispielsweise zur Anzeige 19 des Frontteils übertragen. Alternativ können Schaltimpulse der Bedienelemente 16 über den Sender 12 an den Empfänger 10 des Autoradios 13 übertragen werden. Die weitere Sende-/Empfangseinheit 10, 12 ist alternativ für die bidirektionale Übertragung von Signalen ausgebildet. Besonders geeignet erscheinen elektromagnetisch ausgebildete Sender bzw. Empfänger oder optische Sender/Empfänger mit Leuchtdioden oder auch akustische Sender/Empfänger auf der Basis von Ultraschall. Alternativ sind auch passende Lichtleiter zur Signalübertragung verwendbar.

In weiterer Ausgestaltung der Erfindung ist vorgesehen, die weitere Sende-/Empfangseinheit mit dem ersten Sender-Empfänger 3, 6 zu kombinieren und somit die Signale zusammen mit der Energie zu übertragen. In diesem Fall wird die Wechselspannung des Wechselspannungsgenerators 1 mit den Signalen moduliert und an den Empfänger 6 des Frontteils 20 übertragen. Alternativ kann der Empfänger 6 als Sender Informationen an das Autoradio 30 übertragen, die dann an der Primärwicklung 2 ausgeblendet und decodiert werden.

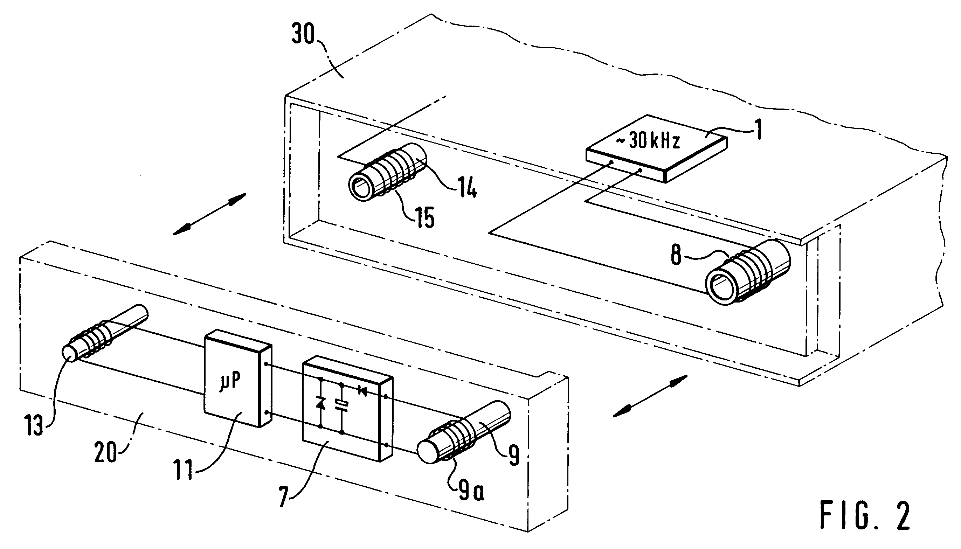

Figur 2 zeigt ein weiteres Ausführungsbeispiel für die Anordnung und Ausbildung der Sende-/Empfangseinheiten. In diesem Fall ist im Autoradio 30 eine Hülse mit einer Primärwicklung 8 vorgesehen. Im Frontteil 20 ist an entsprechender Stelle ein Ferritstab 9 axial angebracht, auf dem eine entsprechende Sekundärwicklung 9a aufgebracht ist. Entsprechend ist eine weitere Sende-/Empfangseinheit 13 bis 15 für die Signalübertragung vorgesehen. Beim Aufstecken des Frontteils 20 auf die Frontseite des Autoradios 30 taucht gekoppelt nun ein Teil des Ferritstabes 9 in die Hülse 8, so daß eine elektromagnetische Kopplung zur Primärspule 8 entsteht. Bei der weiteren Sende-/Empfangseinheit taucht der Ferritstab 13 in die Hülse 14 und ist somit mit der Spule 15 gekoppelt.

Im folgenden wird die Funktionsweise näher erläutert. Aus Vereinfachungsgründen wird davon ausgegangen, daß für die Energie- und/oder Signalübertragung getrennte Sende-/Empfangseinheiten 3, 6, 10, 12; 8 bis 9a, 13 bis 15 verwendet werden. Im Autoradio 30 erzeugt der Wechselspannungsgenerator beispielsweise bei 30 KHz eine Wechselspannung, die über die Primärwicklung 2 des elektromagnetischen Sender 3 einen entsprechenden Magnetfluß im U-förmigen Ferritkern 4 erzeugt. Im Empfänger des Frontteils 20 wird der elektromagnetische Fluß empfangen und mittels der Sekundärwicklung 5 eine entsprechende Wechselspannung erzeugt. Die Wechselspannung wird mit einem Spannungswandler 7, der im wesentlichen einem Gleichrichter mit einem Siebteil sowie ein Pufferspeicher aufweist, gleichgerichtet und über die Leitung 17 auf die Steuerung 11 gegeben. Die Steuerung 11 sowie auch weitere angeschlossene Einheiten wie die Anzeige 19 oder Bedienelemente 16 können somit mit Spannung versorgt werden. Die Steuerung 11 weist einen Mikroprozessor mit einem entsprechenden Pufferspeicher für Daten und Programme auf. Wird ein Bedienelement 16 gedrückt, dann wird dessen Funktion von der Steuerung 11 erkannt und über die Leitung 18 an den weiteren Sender 12 geleitet. Der Sender 12 arbeitet bei elektromagnetischer Übertragung ähnlich wie der erste Sender bzw. Empfänger 3, 6 und überträgt die Daten und Informationen an den Empfänger 10 des Autoradios 30. Bei direktionalem Betrieb kann der Empfänger 10 als Sender ausgebildet sein und die Informationen an einen entsprechend ausgebildeten Empfänger 12 im Frontteil 20 übertragen. Diese Daten werden dann ebenfalls von der Steuerung 11 ausgewertet und beispielsweise auf der Anzeige 19 dargestellt. Bei optischer Übertragung mittels eines geeigneten Lichtleiters kann die Steuerung nicht dargestellte Leuchtdioden ansteuern, die ihre Lichtstrahlung entweder direkt auf entsprechende Fotowiderstände oder Fototransistoren im Autoradio 30 übertragen oder die die Signale mittels nicht dargestellter Lichtleiter an das Autoradio 30 übertragen.

Wenigstens eine Funktion der übertragbaren Signale wird beispielsweise mittels Schalter oder Widerstände oder durch Programmierung im Frontprozessor derart programmiert, daß sie für die Codierung des Autoradios bzw. des zugehörigen abnehmbaren Frontteils 20 als Kennung verwendbar ist. Durch die Codierung wird das Frontteil 20 dem Autoradio 30 fest zugeordnet, so daß bei unterschiedlicher Codierung das Autoradio 30 nicht funktionsfähig ist.

In weiterer Ausgestaltung der Erfindung ist vorgesehen, daß das Frontteil 20 in wenigstens zwei Teile aufgeteilt ist, wobei ein Teil als abnehmbar ausgestaltet ist. Dieses abnehmbare Teil enthält vorzugsweise eine oder mehrere Sende-/Empfängereinheiten 3, 6, 10, 12; 8 bis 9a, 13 bis 15. Vorzugsweise enthält das abnehmbare Bauteil als wesentliche weitere Einheit eine Codierschaltung, die aus Widerständen oder einem Speichermodul gebildet ist und mit einer einmaligen Kennung codiert ist. Das Autoradio 30 enthält eine entsprechende Prüfeinrichtung, die die Codierung erkennen kann und die Autoradiofunktionen nur freigibt, wenn der Code des Frontteils identisch ist mit einem gespeicherten Code im Autoradio 30.

## Patentansprüche

1. Abnehmbares Frontteil für ein Autoradio mit wenigstens einem Bedienelement und/oder einer Anzeige und mit Leitungen zur Energie- und/oder Signalübertragung, dadurch gekennzeichnet, daß das Autoradio (30) wenigstens einen im Nahbereich wirkenden elektromagnetischen Sender (3) aufweist, dessen Energie an einen entsprechenden Empfänger (6) am Frontteil (20) übertragbar ist, daß der Empfänger (6) mit einem Spannungswandler (7) verbunden ist und daß der Spannungswandler (7) ausgebildet ist, aus der empfangenen Energie die Versorgungsspannung für das wenigstens eine Bedienelement (16) und/oder eine Anzeige (19) zu erzeugen.

2. Frontteil nach Anspruch 1, dadurch gekennzeichnet, daß der elektromagnetische Sender (3) und der Empfänger (6) zur Übertragung von Signalen mit Informationen ausgebildet ist.

3. Frontteil nach Anspruch 1 oder 2, dadurch gekennzeichnet, daß die Signale des Senders (3) und des Empfängers (6) nach dem Frequenz-, Phasen- oder Amplitudenmodulationsverfahren modulierbar sind.

4. Frontteil nach einem der vorherigen Ansprüche, dadurch gekennzeichnet, daß wenigstens eine weitere Sende-/Empfangseinheit (10, 12; 13 bis 15) im Frontteil (20) bzw. im Autoradio (30) vorsebbar ist und daß die weitere Sende-/Empfangseinheit (10, 12; 13 bis 15) zur Signalübertragung zwischen dem Frontteil (20) und dem Autoradio (30) ausgebildet ist.

5. Frontteil nach Anspruch 4, dadurch gekennzeichnet, daR die weitere Sende-/Empfangseinheit (10, 12; 13 bis 15) zur bidirektionalen Signalübertragung verwendbar ist.

6. Frontteil nach Anspruch 4 oder 5, dadurch gekennzeichnet, daß die weitere Sende-/Empfangseinheit (10, 12, 13 bis 15) zur Übertragung von elektromagnetischen und/oder optischen Signalen ausgebildet ist.

7. Frontteil nach Anspruch 6, dadurch gekennzeichnet, daß wenigstens ein Teil der übertragbaren Signale mit einer Kennung codierbar ist, die vom Autoradio (30) und dem Frontteil (20) prüfbar ist, und daß nur bei Übereinstimmung der Kennung des Autoradios (30) und des Frontteils (20) das Autoradio (30) funktionsfähig ist.

8. Frontteil nach einem der vorherigen Ansprüche, dadurch gekennzeichnet, daß das Frontteil (20) als Diebstahlschutz für das Autoradio (30) ausgebildet ist.

9. Frontteil nach Anspruch 8, dadurch gekennzeichnet, daß das abnehmbare Frontteil als Teil des gesamten Frontteils ausgebildet ist und eine codierbare Schutzschaltung aufweist, die vorzugsweise aus Widerständen oder einem Speichermodul gebildet ist.
